# EUROPÄISCHE PATENTSCHRIFT

(11) **EP 0 974 858 B1**
(45) Veröffentlichungstag und Bekanntmachung des Hinweises auf die Patenterteilung: **13.09.2006**
(21) Anmeldenummer: 99111820.9
(22) Anmeldetag: 19.06.1999
(51) Int. Cl.: G02B 7/198, G02B 7/182, B23K 26/02

(54) **Lagerung für einen Spiegel zur Führung eines Laserstrahls an einer Laserbearbeitungsmaschine sowie Spiegelflächenträger als Teil einer derartigen Lagerung**
Mounting for a mirror for guiding a laser beam at a laser processing machine and mirror mount as part of such a mounting
Dispositif de support pour miroir de guidage d'un rayon laser dans une machine d'usinage au laser et fixage de miroir faisant partie du dispositif de support

(30) Priorität: 22.07.1998 DE 29813064 U
(43) Veröffentlichungstag der Anmeldung: 26.01.2000
(73) Patentinhaber: Trumpf GmbH & Co, D-71254 Ditzingen (DE)
(72) Erfinder: Andreasch, Wolfgang Dr.Ing., 71384 Weinstadt (DE); Häcker, Michael Dipl.-Ing., 71229 Wimsheim (DE)
(74) Vertreter: Kohler Schmid Möbus

(56) Entgegenhaltungen:
- CA-A- 545 976
- US-A- 4 863 243
- AHMAD A: "LOW-COST ADJUSTABLE MIRROR MOUNT" OPTICAL ENGINEERING,US,SOC. OF PHOTO-OPTICAL INSTRUMENTATION ENGINEERS. BELLINGHAM, Bd. 33, Nr. 6, 1. Juni 1994 (1994-06-01), Seiten 2062-2064, XP000454695 ISSN: 0091-3286
- PATENT ABSTRACTS OF JAPAN vol. 014, no. 515 (E-1000), 13. November 1990 (1990-11-13) -& JP 02 214179 A (MITSUBISHI ELECTRIC CORP), 27. August 1990 (1990-08-27)
- PATENT ABSTRACTS OF JAPAN vol. 018, no. 048 (P-1682), 25. Januar 1994 (1994-01-25) -& JP 05 273450 A (TOSHIBA CORP), 22. Oktober 1993 (1993-10-22)
- PATENT ABSTRACTS OF JAPAN vol. 017, no. 461 (P-1598), 23. August 1993 (1993-08-23) -& JP 05 107445 A (AMADA CO LTD), 30. April 1993 (1993-04-30)
- PATENT ABSTRACTS OF JAPAN vol. 013, no. 555 (M-904), 11. Dezember 1989 (1989-12-11) -& JP 01 228691 A (MITSUBISHI ELECTRIC CORP), 12. September 1989 (1989-09-12)

## Beschreibung

Die Erfindung betrifft eine Vorrichtung bestehend aus einem Spiegel zur Führung eines Laserstrahls an einer Laserbearbeitungsmaschine, einem Grundkörper sowie einer Lagerung für den Spiegel, die wenigstens einen an dem Grundkörper gehaltenen Spiegelflächenträger, eine Justiereinrichtung sowie eine Stützeinrichtung aufweist, wobei die Stützeinrichtung zusätzlich zu der Justiereinrichtung vorgesehen und zwischen dem Spiegelflächenträger und dem Grundkörper angeordnet ist und zumindest einen als Gußkörper ausgebildeten Stützkörper umfaßt und wobei der Spiegelflächenträger mittels der Justiereinrichtung in eine Sollage gegenüber dem Grundkörper einstellbar ist und sich in der Sollage über die Stützeinrichtung an dem Grundkörper gegen Lageveränderung abstützt, indem der Stützkörper einerseits an einem dem Spiegelflächenträger zugeordneten Widerlager und andererseits an einem dem Grundkörper zugeordneten Widerlager abgestützt ist.

Für die funktionsgerechte Ausbildung des Laserbearbeitungsstrahles ist es zwingend erforderlich, daß die an der Laserbearbeitungsmaschine zur Führung des Laserstrahls vorgesehenen Spiegel bzw. deren Spiegelflächen exakt ausgerichtet sind. Einer genauen Justierung bedürfen dabei sowohl die Spiegelflächen innerhalb als auch die Spiegelflächen außerhalb des Resonators.

Eine bekannte Lagerung dient der Einstellung einer Spiegelfläche zur Führung des Laserstrahls im Innern des Resonators und macht zu diesem Zweck Gebrauch von einer Justiereinrichtung mit Justierschrauben, die einen Spiegelflächenträger durchsetzen und in den einen Grundkörper bildenden Resonatorblock eingeschraubt sind. In gewohnter Weise läßt sich der Spiegelflächenträger und mit diesem die Spiegelfläche durch Drehen der Justierschrauben gegenüber dem Grundkörper schwenken und dadurch zur Führung des Laserstrahls im Resonatorinnern exakt ausrichten. Die bei der Justage von dem Spiegelflächenträger beschriebenen Schwenkwinkel liegen in der Größenordnung von einigen Tausendstel Grad. Die vorbekannten Justierschrauben dienen gleichzeitig zur Befestigung des Spiegelflächenträgers an dem Resonatorblock. Die selbsthemmende Ausbildung der Gewinde der Justierschrauben bewirkt, daß der Spiegelflächenträger seine einmal eingestellte Lage gegenüber dem Resonatorblock dauerhaft beibehält.

Eine Vorrichtung der eingangs genannten Art ist offenbart in CH 545 976 A. Dieser Stand der Technik betrifft eine optische Justiereinrichtung mit einem Spiegelflächenträger in Form eines Spiegelkörpers sowie mit einem einen Grundkörper bildenden und den Spiegelkörper lagernden Trägerstück. Einstellmittel ermöglichen eine Justage des Spiegelkörpers bzw. eines an diesem vorgesehenen Spiegels. Zur Sicherung einer Einstellung des Spiegelkörpers dient ein Klebstoff, der zwischen Trägerstück und Spiegelkörper eingeführt wird und durch Kapillarwirkung auf die Berührungslinie von Trägerstück und Spiegelkörper gelangt.

Ausgehend von dem Stand der Technik nach CH 545 976 A liegt der Erfindung die Aufgabe zugrunde, die Wirksamkeit der Justagesicherung von Spiegelflächenträgern zu erhöhen.

Erfindungsgemäß gelöst wird diese Aufgabe durch die Vorrichtung nach Patentanspruch 1.

Zusätzlich zu der Justiereinrichtung ist wenigstens eine Stützeinrichtung vorgesehen, die zwischen dem Spiegelflächenträger und dem Grundkörper angeordnet ist und über welche sich der in Sollage befindliche Spiegelflächenträger an dem Grundkörper gegen Lageveränderung abstützt. Die Stützeinrichtung dient zur mechanischen Sicherung der mittels der Justiereinrichtung vorgenommenen Einstellung des Spiegelflächenträgers und somit der Spiegelfläche in der Sollage. Der Stützkörper der Stützeinrichtung ist als Gußkörper ausgebildet und dementsprechend auf einfache Art und Weise maßgenau zu fertigen. Ungeachtet einer einfachen Herstellung wird eine wirksame Sicherung des Spiegelflächenträgers in der Sollage dadurch bewerkstelligt, daß an dem Spiegelflächenträger und/oder an dem Grundkörper wenigstens ein Vorsprung vorgesehen ist, welcher in eine zugeordnete Aufnahme an dem jeweils anderen Bauteil eingreift und dieses lagert, wobei der Zwischenraum für den Gußkörper zwischen den Wandungen der Aufnahme und des Vorsprungs gebildet ist. Diese Wandungen dienen als Widerlager für den Gußkörper.

Der genannte Vorsprung kann mit dem restlichen Spiegelflächenträger bzw. dem restlichen Grundkörper einstückig aus dem Vollen gefertigt sein. Damit der Spiegelflächenträger trotz seiner Sicherung in Sollage von dem Grundkörper ohne größeren Aufwand abgenommen werden kann, ist in Weiterbildung der Erfindung aber vorgesehen, daß der wenigstens eine Vorsprung eine Hülse sowie einen die Hülse in axialer Richtung durchsetzenden Bolzen umfaßt, wobei die Hülse mit ihrer Außenwandung eines der Widerlager für den Gußkörper bildet und der Bolzen lösbar an dem mit dem Vorsprung versehenen Spiegelflächenträger bzw. Grundkörper befestigt ist. Zum Trennen von Spiegelflächenträger und Grundkörper ist in diesem Fall lediglich der genannte Bolzen zu lösen. Anschließend läßt sich der Spiegelflächenträger von dem Grundkörper abnehmen, wobei die Hülse im Innern der Aufnahme verbleiben kann, sofern sie dort durch den Gußkörper festgelegt ist.

Nachstehend wird die Erfindung anhand schematischer Darstellungen zu Ausführungsbeispielen näher erläutert. Es zeigen:
- Figur 1: eine stark vereinfachte Darstellung einer Lagerung für einen Spiegel mit Stützkörpern in Form von Gußkörpern,
- Figur 2a: eine weitere Lagerung für einen Spiegel mit Stützkörpern in Form von Gußkörpern und
- Figur 2b: das Detail II b gemäß Figur 2a in vergrößerter, teilgeschnittener Darstellung.

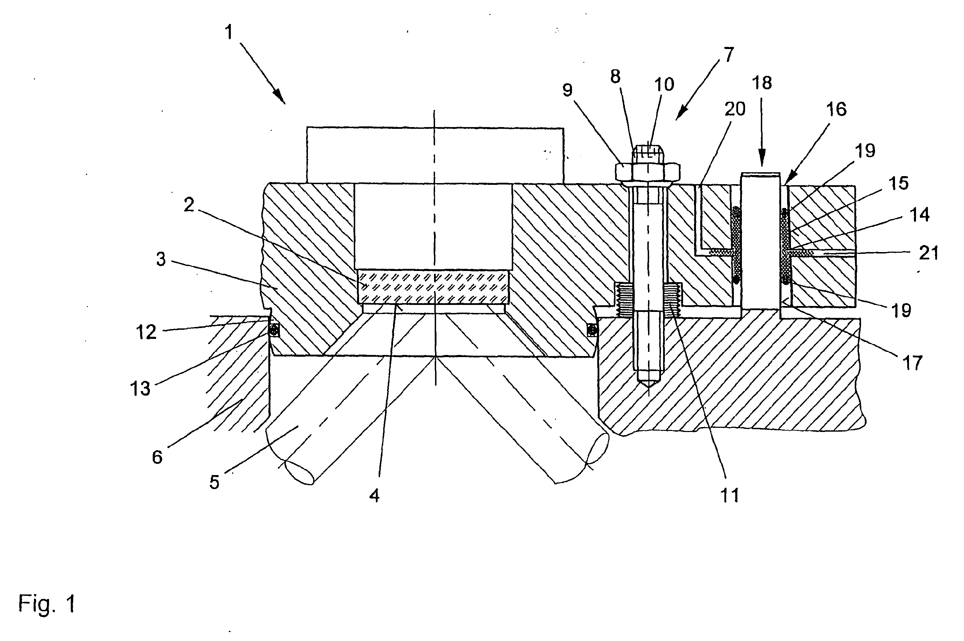

Ausweislich Figur 1 umfaßt eine Lagerung 1 für einen Spiegel 2 an einer Laserbearbeitungsmaschine einen Spiegelflächenträger 3, der den mit einer Spiegelfläche 4 versehenen Spiegel 2 lagert. Die Spiegelfläche 4 dient zur Führung eines Laserstrahls 5 im Innern eines einen Grundkörper bildenden Resonatorblocks 6. Zur Justierung des Spiegelflächenträgers 3 und somit der Spiegelfläche 4 gegenüber dem Resonatorblock 6 weist die Lagerung 1 eine Justiereinrichtung 7 mit insgesamt drei über den Spiegelflächenträger 3 verteilt angeordneten Gewindebolzen 8 mit Stellmuttern 9 auf. Von den drei Gewindebolzen 8 und Stellmuttern 9 ist in Figur 1 jeweils lediglich ein einziger bzw. eine einzige erkennbar.

Der Gewindebolzen 8 ist mit einem Werkzeugeingriff in Form eines Innensechskants 10 versehen, durch den Spiegelflächenträger 3 mit radialem Spiel hindurchgeführt und mit dem Resonatorblock 6 verschraubt. Die Stellmutter 9 ist relativ zu dem Gewindebolzen 8 drehbar auf diesen aufgeschraubt und stützt sich mit ihrer balligen Unterseite auf dem Spiegelflächenträger 3 ab. Der Spiegelflächenträger 3 wiederum ruht über Tellerfedern 11, die von dem Gewindebolzen 8 durchsetzt werden, auf dem Resonatorblock 6. Durch Drehen der Stellmutter 9 gegenüber dem Gewindebolzen 8 und entsprechende Verlagerung der Stellmutter 9 in axialer Richtung des Gewindebolzens 8 wird gegen die von den Tellerfedern 11 ausgeübte Kraft oder mit deren Unterstützung eine Verstellung des Spiegelflächenträgers 3 gegenüber dem Resonatorblock 6 bewirkt. Aufgrund der selbsthemmenden Ausbildung der Gewindeverbindung von Gewindebolzen 8 und Stellmutter 9 sowie der Vorspannung der Tellerfedern 11 ist der Spiegelflächenträger 3 in der jeweils eingestellten Lage gegenüber dem Resonatorblock 6 ohne weiteres arretiert. Im übrigen veranschaulicht Figur 1, daß erfindungsgemäß die Justiereinrichtung generell auch zur Befestigung des Spiegelflächenträgers an dem Grundkörper bzw. Resonatorblock dienen kann.

Ein unmittelbarer Kontakt zwischen dem Spiegelflächenträger 3 und dem Resonatorblock 6 ergibt sich an einem kugelkalottenartigen Ansatz 12 des Spiegelflächenträgers 3, welcher sich an einer gegenüberliegenden Wandung des Resonatorblocks 6 abstützt. Zur Abdichtung des Strahlführungsraumes im Resonatorinnern gegen das Resonatoräußere wird ein O-Ring 13 verwendet.

Zur Sicherung des Spiegelflächenträgers 3 bzw. der Spiegelfläche 4 in der Sollage, d.h. in derjenigen Position, bei welcher eine optimale Ausbildung des zur Materialbearbeitung genutzten Laserstrahls 5 gewährleistet ist, dient eine Stützeinrichtung in Form eines Gußkörpers 14. Dieser füllt den Zwischenraum aus zwischen einer Wandung 15 einer Aufnahme 16 des Spiegelflächenträgers 3 und einer Wandung 17 eines in die Aufnahme 16 eingreifenden Vorsprungs bzw. Lagervorsprungs 18 des Resonatorblocks 6. In axialer Richtung des Lagervorsprungs 18 wird der den Gußkörper 14 aufnehmende Zwischenraum zwischen den Wandungen 15, 17 durch O-Ringe 19 begrenzt. Über einen Zufuhrkanal 20 sowie einen Entlüftungskanal 21 steht der genannte Zwischenraum mit der Außenseite des Spiegelflächenträgers 3 in Verbindung.

Zur Herstellung des Gußkörpers 14 wurde ein aushärtender Kunststoff in flüssigem Zustand durch den Zufuhrkanal 20 in den von den O-Ringen 19 begrenzten Zwischenraum zwischen den Wandungen 15, 17 der Aufnahme 16 sowie des Lagervorsprungs 18 eingepreßt. Die in dem Zwischenraum zunächst enthaltene Luft konnte dabei durch den Entlüftungskanal 21 entweichen. Durch das Verfestigen des flüssigen Kunststoffs entstand der Gußkörper 14, mittels dessen der Spiegelflächenträger 3 in der zuvor mittels der Justiereinrichtung 7 eingestellten Sollage dauerhaft wirksam gesichert ist. Die Wandung 15 der Aufnahme 16 bildet das dem Spiegelflächenträger 3, die Wandung 17 des Lagervorsprungs 18 das dem Resonatorblock 6 zugeordnete Widerlager für den Gußkörper 14. Eine ungewollte Lageänderung des Spiegelflächenträgers 3 wird dabei sowohl durch einen über den Gußkörper 14 zwischen dem Spiegelflächenträger 3 und dem Resonatorblock 6 hergestellten Form- als auch durch einen entsprechenden Kraftschluß verhindert. Der Formschluß ergibt sich aufgrund der geneigten Anordnung der Achse des Lagervorsprunges 18 an dem Resonatorblock 6 gegenüber der Achse der Aufnahme 16 an dem Spiegelflächenträger 3. Wie in Figur 1 erkennbar resultiert aus der gegeneinander geneigten Anordnung der beiden Achsen - im Querschnitt betrachtet - eine Keilform der beidseits des Lagervorsprungs 18 angeordneten Teile des Gußkörpers 14. Infolge dieser Keilform wirkt der Gußkörper 14 einer Verlagerung des Spiegelflächenträgers 3 gegenüber dem Resonatorblock 6 sowohl in Figur 1 nach oben als auch in Figur 1 nach unten entgegen. Ein Kraftschluß wird zwischen dem Spiegelflächenträger 3 und dem Resonatorblock 6 dadurch erzielt, daß der zur Herstellung des Gußkörpers 14 verwendete Kunststoff beim Aushärten eine Klebeverbindung sowohl mit der Wandung 15 der Aufnahme 16 an dem Spiegelflächenträger 3 als auch mit der Wandung 17 an dem Lagervorsprung 18 des Resonatorblocks 6 eingeht. Insgesamt bewirkt der Gußkörper 14 neben einer Sicherung des Spiegelflächenträgers 3 auch dessen Befestigung an dem Resonatorblock 6.

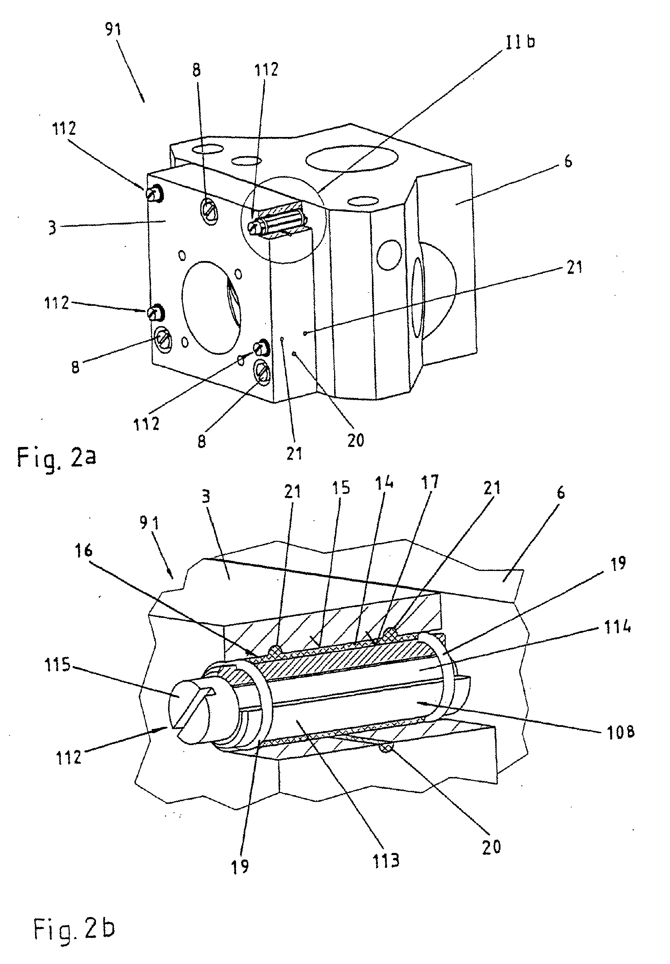

Eine in den Figuren 2a und 2b dargestellte Lagerung 91 unterscheidet sich von der Lagerung 1 nach Figur 1 im wesentlichen durch die Ausbildung des an dem Resonatorblock 6 vorgesehenen Lagervorsprungs. Im übrigen sind auch in den Figuren 2a und 2b für entsprechende Bauteile die in Figur 1 verwendeten Bezugszeichen vorgesehen.

Ausweislich Figur 2b wird ein Vorsprung in Form eines Lagervorsprungs 108 des Resonatorblocks 6 gebildet von einer Schraube 112 sowie einer Hülse 113. Mit ihrem Bolzen 114 ist die Schraube 112 lösbar in ein entsprechendes Gewinde an dem Resonatorblock 6 eingedreht. Die Hülse 113 umschließt den Bolzen 114 im Bereich der Aufnahme 16 des Spiegelflächenträgers 3 konzentrisch. In Einbaulage wird die Hülse 113 an ihrem von dem Resonatorblock 6 ab liegenden Ende über einen Kopf 115 der Schraube 112 in Richtung auf den Resonatorblock 6 beaufschlagt und dadurch zwischen dem Kopf 115 der Schraube 112 und dem Resonatorblock 6 eingespannt.

Aufgrund der beschriebenen Ausgestaltung des Lagervorsprungs 108 läßt sich der Spiegelflächenträger 3 ungeachtet seiner mittels des Gußkörpers 14 bewerkstelligten Sicherung in der Sollage beispielsweise zum Austausch gegen einen anderen Spiegelflächenträger von dem Resonatorblock 6 abnehmen. Zu diesem Zweck ist lediglich die Schraube 112 zu lösen. Eine entsprechende Drehbewegung der Schraube 112 ist ohne weiteres möglich, nachdem über den Gußkörper 14 lediglich die Hülse 113 mit dem Spiegelflächenträger 3 u.a. drehfest verbunden ist, die Drehbeweglichkeit der Schraube 112 gegenüber der Hülse 113 hierdurch aber nicht beeinträchtigt wird. Denkbar ist es auch, in der Aufnahme 16 des Spiegelflächenträgers 3 eine zylindrische Hülse beispielsweise mittels Preßsitz zu befestigen, welche dann die Hülse 113 mit der Schraube 112 unter Bildung eines Ringraumes zwischen der Außenwand der Hülse 113 und der Innenwand der durch Preßsitz gehaltenen Hülse aufnehmen kann. In den genannten Ringraum läßt sich eine Gußmasse zur Bildung des Gußkörpers 14 einbringen. Von Vorteil ist die letztgenannte konstruktive Lösung insofern, als sie ein Demontieren der Hülse 113, beispielsweise durch Ausbohren erlaubt, ohne daß eine damit verbundene Beschädigung des durch die mittels Preßsitz gehaltene Hülse geschützten Spiegelflächenträgers 3 befürchtet werden müßte.

Wie Figur 2a zeigt, sind an dem Spiegelflächenträger 3 der Lagerung 91 insgesamt vier der in Figur 2b im einzelnen dargestellten Einheiten aus Schraube 112 und Hülse 113 mit zugehörigem Gußkörper 14 vorgesehen. Vor dem Abnehmen des Spiegelflächenträgers 3 von dem Resonatorblock 6 sind selbstverständlich sämtliche Schrauben 112 zu lösen.

Im Falle der Gußkörper 14 nach den Figuren 1, 2a und 2b ergibt sich eine Anpaßung der Stützkörperform an die als Widerlager dienenden Flächen des Spiegelflächenträgers 3 sowie des Resonatorblocks 6 beim Aushärten des verwendeten Kunststoffes ohne weiteres.

## Patentansprüche

1. Vorrichtung bestehend aus einem Spiegel (2) zur Führung eines Laserstrahls (5) an einer Laserbearbeitungsmaschine, einem Grundkörper (6) sowie einer Lagerung (1, 91) für den Spiegel (2), die wenigstens einen an dem Grundkörper (6) gehaltenen Spiegelflächenträger (3), eine Justiereinrichtung (7) sowie eine Stützeinrichtung aufweist, wobei die Stützeinrichtung zusätzlich zu der Justiereinrichtung (7) vorgesehen und zwischen dem Spiegelflächenträger (3) und dem Grundkörper (6) angeordnet ist und zumindest einen als Gußkörper ausgebildeten Stützkörper umfaßt und wobei der Spiegelflächenträger (3) mittels der Justiereinrichtung (7) in eine Sollage gegenüber dem Grundkörper (6) einstellbar ist und sich in der Sollage über die Stützeinrichtung an dem Grundkörper (6) gegen Lageveränderung abstützt, indem der Stützkörper einerseits an einem dem Spiegelflächenträger (3) zugeordneten Widerlager und andererseits an einem dem Grundkörper (6) zugeordneten Widerlager abgestützt ist, **dadurch gekennzeichnet, daß** der als Gußkörper (14) ausgebildete Stützkörper einen bereits vor dem Einbringen der den Gußkörper (14) ausbildenden Gußmasse bestehenden Zwischenraum zwischen dem dem Spiegelflächenträger (3) und dem dem Grundkörper (6) zugeordneten Widerlager wenigstens teilweise ausfüllt, wobei an dem Spiegelflächenträger (3) und/oder an dem Grundkörper (6) wenigstens ein Vorsprung (18, 108) vorgesehen ist, welcher in eine zugeordnete Aufnahme (16) an dem jeweils anderen Bauteil eingreift und dieses lagert und wobei der Zwischenraum zur Aufnahme des Gußkörpers (14) zwischen den Wandungen (15, 17) der Aufnahme (16) und des Vorsprungs (18, 108) gebildet ist und diese Wandungen die Widerlager für den Gußkörper (14) bilden.

2. Vorrichtung nach Anspruch 1, **dadurch gekennzeichnet, daß** der wenigstens eine Vorsprung (108) eine Hülse (113) sowie einen die Hülse (113) in axialer Richtung durchsetzenden Bolzen (114) umfaßt, wobei die Hülse (113) mit ihrer Außenwandung eines der Widerlager für den Gußkörper (14) bildet und der Bolzen (114) lösbar an dem mit dem Vorsprung (108) versehenen Spiegelflächenträger (3) bzw. Grundkörper (6) befestigt ist.

## Claims

1. Device comprising a mirror (2) for guiding a laser beam (5) in a laser processing machine, a base member (6) and a support (1, 91) for the mirror (2), which support has at least one mirror face carrier (3) which is retained on the base member (6), an adjustment device (7) and a support device, the support device being provided in addition to the adjustment device (7) and being arranged between the mirror face carrier (3) and the base member (6) and comprising at least one support member which is constructed as a cast member and the mirror face carrier (3) being able to be adjusted into a desired position relative to the base member (6) by means of the adjustment device (7) and being supported in the desired position on the base member (6) against positional variation by means of the support device by the support member being supported, at one side, on an abutment which is associated with the mirror face carrier (3) and, at the other side, on an abutment which is associated with the base member (6), **characterised in that** the support member which is constructed as a cast member (14) at least partially fills an intermediate space which is provided between the abutment which is associated with the mirror face carrier (3) and the abutment, which is associated with the base member (6) and which intermediate space is existing already before the cast mass which forms the cast member (14) is introduced, at least one projection (18, 108) being provided on the mirror face carrier (3) and/or on the base member (6), which projection engages in an associated recess (16) on the respective other component and supports it, and the intermediate space for receiving the cast member (14) being formed between the walls (15, 17) of the recess (16) and the projection (18, 108) and these walls forming the abutments for the cast member (14).

2. Device according to claim 1, **characterised in that** the at least one projection (108) has a sleeve (113) and a pin (114) which extends through the sleeve (113) in an axial direction, the sleeve (113) forming one of the abutments for the cast member (14) with its outer wall and the pin (114) being releasably secured to the mirror face carrier (3) or base member (6) which is provided with the projection (108).

## Revendications

1. Dispositif constitué par un miroir (2) pour le guidage d'un rayon laser (5) dans une machine d'usinage au laser, un corps de base (6) ainsi qu'un logement (1, 91) pour le miroir (2), lequel présente au moins un support de surface de miroir (3) maintenu sur le corps de base (6), un dispositif d'ajustage (7) ainsi qu'un dispositif de support, le dispositif de support étant prévu en plus du dispositif d'ajustage (7) et étant agencé entre le support de surface de miroir (3) et le corps de base (6) et comprenant au moins un corps de support formé comme un corps en fonte, et le support de surface de miroir (3) étant réglable à l'aide du dispositif d'ajustage (7) dans une position exigée par rapport au corps de base (6) et s'appuyant dans la position exigée via le dispositif de support sur le corps de base (6) afin d'éviter un changement de position, le corps de support étant appuyé, d'une part, contre une butée associée au support de surface de miroir (3) et, d'autre part, contre une butée associée au corps de base (6), **caractérisé en ce que** le corps de support formé comme un corps en fonte (14) remplit au moins partiellement un espace intermédiaire compris entre la butée associée au support de surface de miroir (3) et la butée associée au corps de base (6), déjà existant avant l'introduction de la masse de remplissage formant le corps en fonte (14), au moins une saillie (18, 108) étant prévue sur le support de surface de miroir (3) et/ou sur le corps de base (6), laquelle s'engage dans un évidement associé (16) à l'autre composant et loge celui-ci, et l'espace intermédiaire pour recevoir le corps en fonte (14) étant formé entre les parois (15, 17) de l'évidement (16) et de la saillie (18, 108), et ces parois formant les butées pour le corps en fonte (14).

2. Dispositif selon la revendication 1, **caractérisé en ce que** la au moins une saillie (108) comprend une douille (113), ainsi qu'un boulon (114) traversant la douille (113) dans la direction axiale, la douille (113) formant par sa paroi extérieure une des butées pour le corps en fonte (14) et le boulon (114) étant fixé de manière amovible sur le support de surface de miroir (3) ou sur le corps de base (6) pourvu de la saillie (108).
